# FASCICULE DE BREVET EUROPEEN

(11) **EP 2 025 626 B1**
(45) Date de publication et mention de la délivrance du brevet: **19.08.2015**
(21) Numéro de dépôt: 08160840.8
(22) Date de dépôt: 21.07.2008
(51) Int. Cl.: B65G 7/08, B62B 5/00, B65F 1/14, B65F 7/00

(54) **Outil de positionnement d'un récipient de grandes dimensions tel qu'un conteneur de poubelles d'immeuble**
Instrument zum Positionieren eines Behälters mit großen Abmessungen, wie etwa eines Mülltonnenbehälters eines Gebäudes
Tool for positioning a large container such as a household waste container

(30) Priorité: 02.08.2007 FR 0705651
(43) Date de publication de la demande: 18.02.2009
(73) Titulaire: TT Environnement, 69590 Coise (FR)
(72) Inventeur: Tisseaux, Gilles, 69590 Coise (FR)
(74) Mandataire: Thivillier, Patrick

(56) Documents cités:
- FR-A- 581 028
- GB-A- 2 274 088
- NL-A- 7 012 864
- NL-A- 7 807 475
- US-A- 4 981 412

## Description

La présente invention concerne un outil de positionnement d'un récipient de grandes dimensions, tel qu'un conteneur de poubelles d'immeuble, notamment en vue du nettoyage de ce récipient.

Les poubelles des occupants d'un immeuble sont collectées dans des conteneurs de grandes dimensions (il en existe de 340, 500, 660, 750 et 1000 litres), qui comprennent des roulettes et des moyens de prise au niveau de l'un de leurs bords supérieurs. Les roulettes permettent de faciliter le déplacement de ces conteneurs, et lesdits moyens de prise permettent, lors du ramassage des poubelles, la saisie de ces conteneurs par le mécanisme de soulèvement/renversement que comprend un véhicule de collecte des poubelles. Lesdits moyens de prise sont normalisés (norme EN 840), étant sous la forme d'un retour aménagé au niveau de l'un des bords supérieurs d'un conteneur, qui forme une rainure ouverte vers le bas de ce conteneur.

De tels conteneurs doivent être périodiquement nettoyés, ce qui est une opération difficile, longue et fastidieuse pour la personne chargée de cette tâche. Notamment, le renversement d'un tel conteneur dans le but d'accéder au fond de celui-ci afin de réaliser un nettoyage adéquat, est problématique pour cette personne, particulièrement lorsqu'il s'agit d'une femme, compte tenu du poids du conteneur (de 42 à 47 kilos pour le conteneur de 750 litres le plus répandu) et compte tenu de la présence des roulettes, qui génèrent un risque de perte de contrôle du conteneur lors de ce renversement. Le redressement du conteneur après nettoyage est également une opération difficile pour ladite personne, pouvant générer à celle-ci des douleurs dorsales.

Il en résulte le risque que le nettoyage de tels récipients ne soit pas réalisé aussi complètement et aussi fréquemment que cela est nécessaire.

Il existe également des outils assimilables à des diables, comprenant des parties inférieures destinées à venir à proximité immédiate des objets à basculer puis à recevoir ces parties inférieures lorsque l'objet est basculé. En particulier, le document GB 2 274 088, décrit un outil dont la partie inférieure soit repose contre le sol, soit est située à quelques millimètres du sol au moment de soulever une barrique. Les documents N° FR 581 028, NL 7 012 864 ou US 4 981 412 décrivent des outils similaires, de même fonctionnement.

Les outils décrits par ces différents documents ne conviennent pas pour le positionnement d'un récipient de grandes dimensions tel qu'un conteneur de poubelles d'immeuble, et notamment pour le renversement et le nettoyage d'un tel récipient.

La présente invention a pour objectif de remédier à cette lacune, en fournissant un outil convenant pour cet usage, et ayant en outre une structure simple et peu onéreuse à fabriquer, permettant de renverser et de redresser le récipient de manière parfaitement sûre, c'est-à-dire en éliminant tout risque de perte de contrôle du récipient lors de ce renversement ou de ce redressement, et très facile d'utilisation.

Un autre objectif de l'invention est de fournir un tel outil permettant d'accéder facilement au fond du récipient, pour permettre le parfait nettoyage de ce fond, et de faciliter le vidage de l'eau de nettoyage.

Un autre objectif encore de l'invention est de fournir un outil permettant un accès au fond du récipient, du côté extérieur de celui-ci, afin de permettre l'entretien de ce fond ou l'échange de roulettes que peut comprendre le fond du récipient.

L'outil concerné est utilisable avec un récipient comprenant un retour normalisé aménagé au niveau de l'un de ses bords supérieurs, ledit retour formant une rainure ouverte vers le bas.

Selon l'invention, l'outil est conforme aux caractéristiques de la revendication 1.

Lorsque ce récipient comprend des roulettes, ces roulettes ne reposent donc plus contre le sol.

L'outil et le récipient relié à lui sont ensuite inclinés jusqu'à venue de l'outil au contact du sol, ce qui permet de réaliser le renversement du récipient sans aucun risque de perte de contrôle, compte tenu du point d'appui ponctuel et stable de l'extrémité inférieure de chaque montant contre le sol. Le redressement du récipient est réalisé par des opérations inverses, également sans aucun risque de perte de contrôle.

Cet outil est ainsi parfaitement stable.

De préférence, l'outil comprend des moyens de réglage de chaque montant en longueur.

L'outil peut ainsi être adapté à la hauteur spécifique desdits moyens de prise que comprend un récipient à renverser. Cette hauteur n'est en effet pas constante d'un type de récipient à un autre, selon les capacités ou les marques de récipients. Les moyens de réglage précités permettent qu'un même outil soit adapté à un grand nombre de récipients. Ces moyens de réglage peuvent notamment être sous forme d'éléments télescopiques verrouillables dans différentes positions.

L'outil et le récipient relié à lui peuvent ainsi basculer entre ces deux positions de renversement, lesquelles sont stables ; dans ladite première position de renversement, l'ouverture du récipient est plus élevée que le fond de ce récipient, ce qui permet un accès aisé à l'intérieur du récipient, afin de nettoyer la base des parois latérales et le fond de ce récipient ; dans ladite deuxième position de renversement, l'ouverture du récipient est dans une position moins élevée que le fond du récipient, ce qui permet une évacuation de l'eau de nettoyage contenue dans le récipient et également de parfaitement accéder au fond du récipient, du côté extérieur de celui-ci, afin de permettre un parfait nettoyage de l'ensemble de ce fond.

Les moyens anti-glissement à l'extrémité de chaque montant opposée à celle comportant lesdits moyens de prise, consistent en une ou plusieurs pointes destinées à pénétrer légèrement dans le sol ou en un embout en matériau à fort coefficient de friction, par exemple en caoutchouc.

L'invention sera bien comprise, et d'autres caractéristiques et avantages de celle-ci apparaîtront, en référence au dessin schématique annexé, représentant, à titre d'exemple non limitatif, une forme de réalisation préférée de l'outil qu'elle concerne.
La figure 1 en est une vue en perspective ;
la figure 2 en est une vue en cours d'utilisation, un récipient à renverser et l'utilisateur de l'outil étant représentés ; et
les figures 3 à 10 sont des vues de côté de cet outil et du récipient au cours de différentes étapes du nettoyage du récipient.

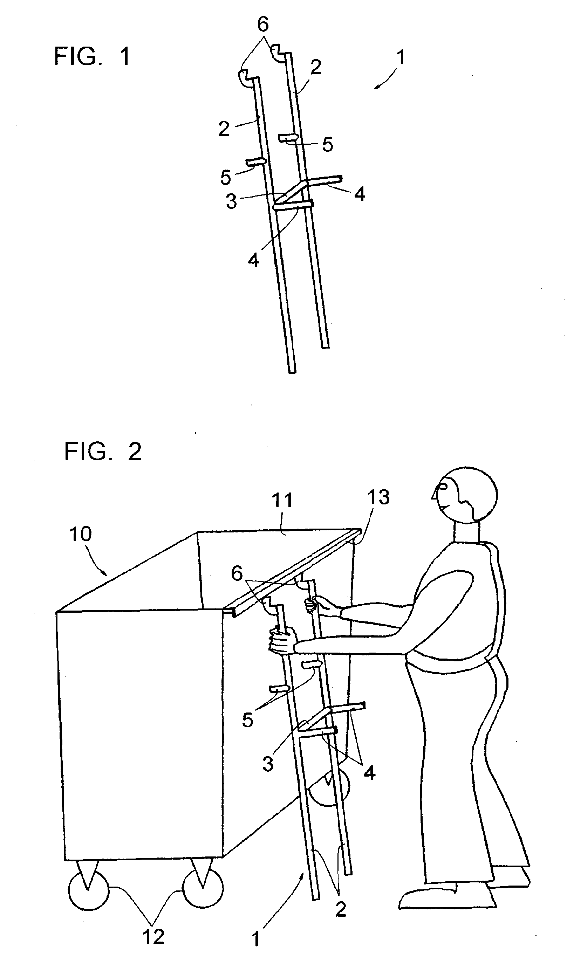

La figure 1 représente un outil 1 de positionnement d'un récipient 10 de grandes dimensions, tel qu'un conteneur de poubelles d'immeuble, notamment en vue du nettoyage de ce récipient.

Ce récipient 10 est plus particulièrement visible sur la figure 2 ; il comprend un bac 11 monté sur des roulettes 12 et un retour normalisé 13, aménagé au niveau de l'un de ses bords supérieurs, qui permet la saisie du récipient 10 par le mécanisme de soulèvement/renversement que comprend un véhicule de collecte des poubelles. Ce retour 13 forme une rainure ouverte vers le bas.

L'outil 1 comprend deux montants 2 reliés l'un à l'autre par une traverse 3, deux branches saillantes 4 et deux saillies 5 formant des entretoises.

L'ensemble est réalisé en un matériau rigide, notamment sous forme de tubes métalliques soudés.

Chaque montant 2 comprend, à une extrémité, une patte 6 en équerre, dont une portion d'extrémité libre est apte à venir en engagement dans la rainure que forme le retour 13, et, à une extrémité opposée, des moyens anti-glissement (non représentés), tels que des pointes destinées à pénétrer légèrement dans le sol ou des embouts en matériau à fort coefficient de friction, par exemple en caoutchouc.

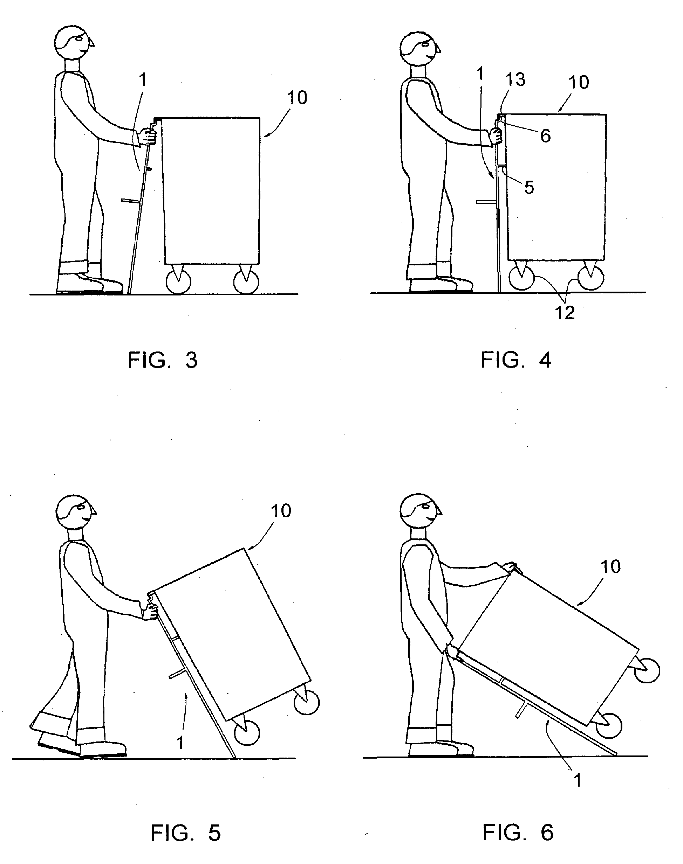

Chaque montant 2 a une longueur supérieure à la hauteur du retour 13 par rapport au sol, par exemple de 20 mm supérieure. Il en résulte que l'outil 1 est légèrement incliné lorsque les pattes 6 des deux montants 2 sont engagées dans ladite rainure et que les extrémités inférieures des montants 2 reposent sur le sol, ainsi que le montrent les figures 2 et 3.

La traverse 3 relie rigidement les deux montants 2 l'un à l'autre de manière à maintenir ces deux montants parallèlement l'un à l'autre.

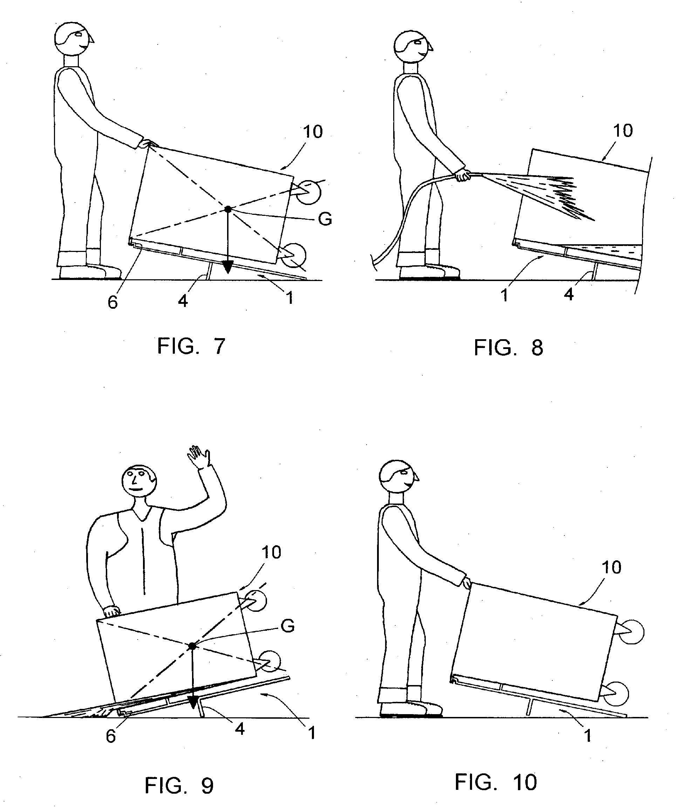

Les branches 4 sont reliées aux montants 2, au niveau de la traverse 3, et font saillie perpendiculairement à ces montants, du côté de ceux-ci opposé à celui le long duquel s'étend le récipient 10 lorsque l'outil 1 est utilisé. Ces branches 4 sont destinées à venir en appui contre le sol lorsque que le récipient 10 est renversé, ainsi que cela est visible sur les figures 7 à 10.

Il apparaît en référence aux figures 7 et 9 que les branches 4 sont positionnées sensiblement à mi-longueur des montants 2, en étant toutefois légèrement décalées du côté des pattes 6. Ces branches 4 se trouvent ainsi, dans la position montrée sur la figure 7, proche du centre de gravité G du récipient 10, en étant situées du côté des pattes 6 par rapport à l'aplomb de ce centre de gravité G, et, dans la position montrée sur la figure 9, également proche du centre de gravité G mais en étant situées du côté opposé aux pattes 6 par rapport à l'aplomb de ce centre de gravité G.

Les saillies 5 sont reliées perpendiculairement aux montants 2 et situées du côté de l'outil 1 destiné à être tourné vers la paroi du récipient 10 lors de l'utilisation de cet outil 1. Comme le montrent les figures 4 à 10, elles sont destinées à recevoir la paroi du récipient 10 lors de cette utilisation et à créer ainsi le couple nécessaire au verrouillage du bac sur l'outil.

En pratique, l'outil 1 est incliné devant un récipient 10 à renverser, de manière à amener les pattes 6 en engagement dans la rainure que délimite le retour 13, et les extrémités inférieures des montants 2 sont amenées en appui contre le sol (cf. figure 2) ; l'outil 1 se trouve alors dans la position légèrement inclinée précitée (cf. figure 3) ; l'outil 1 est ensuite redressé par saisie manuelle des montants 2, jusque dans une position sensiblement verticale, ce qui a pour effet de soulever l'ensemble du récipient 10 par rapport au sol (cf. figure 4) ; l'engagement des pattes 6 avec le retour 13 est ainsi assuré, les roulettes 12 ne reposent plus contre le sol, et la paroi du bac 11 est reçue par des entretoises 5.

L'outil 1 et le récipient 10 relié à lui sont ensuite inclinés jusqu'à venue des branches 4 au contact du sol (cf. figures 5 à 7), ce qui permet de réaliser le renversement du récipient 10 sans aucun risque de perte de contrôle, compte tenu des points d'appui ponctuels et stables contre le sol que forment les extrémités inférieures des montants 2.

Du fait de la position précitée des branches 4, le récipient 10 est ainsi maintenu dans une première position stable de renversement, montrée sur la figure 7. Dans cette position, l'ouverture du bac 11 est plus élevée que le fond de ce bac, ce qui permet à l'utilisateur d'avoir un accès aisé à l'intérieur du bac 11, pour nettoyer la base des parois latérales et le fond de ce bac, avec collecte des effluents dans ce dernier (cf. figure 8).

Une fois ce nettoyage terminé, l'ensemble peut être basculé dans une deuxième position stable de renversement, montrée sur la figure 9, dans laquelle l'ouverture du bac 11 est dans une position moins élevée que le fond de ce bac ; cette deuxième position permet une évacuation de l'eau de nettoyage contenue dans le bac 11 et également de parfaitement accéder au fond de ce bac, du côté extérieur de celui-ci, pour permettre un parfait nettoyage de l'ensemble de ce fond.

Le redressement du récipient 10 est réalisé par des opérations inverses, également sans aucun risque de perte de contrôle (cf. figures 10, puis 6 à 3, successivement).

Comme cela apparaît de ce qui précède, l'invention fournit un outil 1 de positionnement d'un récipient 10 de grandes dimensions, tel qu'un conteneur de poubelles d'immeuble, notamment en vue du nettoyage de ce récipient, qui présente les avantages déterminants d'avoir une structure simple et peu onéreuse à fabriquer, de permettre de renverser et de redresser le récipient de manière parfaitement sûre, c'est-à-dire en éliminant tout risque de perte de contrôle du récipient lors de ce renversement ou de ce redressement, et d'être très facile d'utilisation. Cet outil 1 permet également d'accéder facilement au fond du récipient, pour permettre le parfait nettoyage de ce fond, de faciliter le vidage de l'eau de nettoyage et de facilement accéder au fond du récipient, du côté extérieur de celui-ci, afin de permettre l'entretien ou l'échange des roulettes du récipient.

L'invention a été décrite ci-dessus en référence à une forme de réalisation donnée à titre de pur exemple. Il va de soi qu'elle n'est pas limitée à cette forme de réalisation mais qu'elle peut faire l'objet de variantes dans le cadre de la portée des revendications ci-annexées.

## Revendications

1. Outil (1) pour le renversement et le redressement d'un conteneur (10) de poubelles monté sur roulette, afin de faciliter son nettoyage, ledit conteneur comprenant un retour normalisé (13) aménagé au niveau de l'un de ses bords supérieurs, ledit retour (13) formant une rainure ouverte vers le bas, ***caractérisé* en ce qu'**il comprend au moins deux montants (2) reliés l'un à l'autre par au moins une traverse (3), chaque montant comprend :
- à une extrémité un moyen anti-glissement d'appui au sol, et à une extrémité opposée, une patte (6) en équerre, dont une portion d'extrémité libre est apte à venir en engagement dans la rainure que forme le retour (13) du récipient (10),
- une saillie (5) formant entretoise apte à prendre appui, en position d'engagement des pattes dans la rainure ouverte vers le bas, sur une paroi du conteneur recevant ladite rainure,
- une branche (4) faisant saillie d'une manière opposée à la saillie (5) formant entretoise et située sensiblement à mi-longueur du montant en étant toutefois décalée du côté des pattes (6), ladite branche étant apte à prendre appui au sol, soit selon une première position de renversement dudit conteneur selon laquelle les extrémités des montants considérés du côté des pattes (6) ne sont pas en contact avec le sol, soit selon une deuxième position de renversement dudit conteneur selon laquelle les extrémités des montants (2) considérées du côté des pattes (6), sont en contact avec le sol.

2. Outil (1) selon la revendication 1, ***caractérisé* en ce qu'**il comprend des moyens de réglage en longueur de chaque montant (2).

3. Outil (1) selon l'un quelconque des revendications 1 à 2, ***caractérisé* en ce que** lesdites branches (4) sont perpendiculaires aux montants (2).

4. Outil (1) selon la revendication 1, ***caractérisé* en ce que** lesdits moyens anti-glissement consistent en une ou plusieurs pointes destinées à pénétrer légèrement dans le sol.

5. Outil (1) Selon la revendication 1, ***caractérisé* en ce que** lesdits moyens anti-glissement consistent en un embout en matériau à fort coefficient de friction.

6. Outil (1) selon la revendication 5, ***caractérisé* en ce que** le matériau à fort coefficient de friction consiste dans du caoutchouc.

## Patentansprüche

1. Werkzeug (1) zum Umkippen und Aufrichten eines Mülleimerbehälters (109), der auf Rollen montiert ist, um seine Reinigung zu erleichtern, wobei der genannte Behälter eine genormte Umbiegung (13) umfasst, die auf der Höhe eines seiner oberen Ränder angeordnet ist, wobei die genannte Umbiegung (13) eine offene Rille nach unten bildet, **dadurch *gekennzeichnet,* dass** es wenigstens zwei Pfosten (2) umfasst, die miteinander durch wenigstens einen Querträger (3) verbunden sind, wobei jeder Pfosten umfasst:
- an einem Ende ein Antigleitmittel zum Aufstützen auf dem Boden und an einem entgegengesetzten Ende eine winkelförmige Klaue (6), deren einer freier Endabschnitt geeignet ist, in die Rille einzugreifen, die die Umbiegung (13) des Behälters (10) bildet,
- einen Vorsprung (5), der einen Steg bildet, der geeignet ist, sich in der Eingreifposition der Klauen in der nach unten offenen Rille auf einer die genannte Rille aufnehmenden Wand des Behälters aufzustützen,
- einen Zweig (4), der entgegengesetzt zu dem einen Steg bildenden Vorsprung (5) und deutlich in der mittleren Länge des Pfostens hervorsteht und dabei jedoch von der Seite der Klauen (6) verschoben ist, wobei der genannte Zweig geeignet ist, sich auf dem Boden aufzustützen, entweder gemäß einer ersten Umkippposition des genannten Behälters, nach der die Enden der betrachteten Pfosten auf der Seite der Klauen (6) nicht mit dem Boden in Kontakt sind, oder gemäß einer zweiten Umkippposition des genannten Behälters, gemäß der die betrachteten Enden der Pfosten (2) auf der Seite der Klauen (6) sich mit dem Boden in Kontakt befinden.

2. Werkzeug (1) gemäß Anspruch 1, **dadurch *gekennzeichnet,* dass** es Einstellmittel jedes Pfostens (2) in der Länge umfasst.

3. Werkzeug (1) gemäß Anspruch 1 oder 2, **dadurch *gekennzeichnet,* dass** die genannten Zweige (4) lotrecht zu den Pfosten (2) sind.

4. Werkzeug (1) gemäß Anspruch 1, **dadurch *gekennzeichnet,* dass** die genannten Antigleitmittel aus einer oder mehreren Spitzen bestehen, die dazu bestimmt ist / sind, leicht in den Boden einzudringen.

5. Werkzeug (1) gemäß Anspruch 1, **dadurch *gekennzeichnet,* dass** die genannten Antigleitmittel in einem Ansatzstück aus Material mit hohem Reibungskoeffizienten bestehen.

6. Werkzeug (1) gemäß Anspruch 5, **dadurch *gekennzeichnet,* dass** das Material mit hohem Reibungskoeffizienten aus Kautschuk besteht.

## Claims

1. A tool (1) to tilt and raise a wheeled garbage container (10) in order to facilitate its cleaning, with the said container having a standardised means of engagement (13) along one of its upper edges, with the said means of engagement (13) forming a groove that opens towards the ground, ***characterised* in that** it consists of at least two columns (2) connected to each other by means of at least one cross-beam (3), with each column having:
- at one end, an anti-slip means of support, and at the other end, a bracket attachment (6), a part of whose free end can engage with the groove formed by the means of engagement (13) of the container (10),
- a projection (5) that forms a spacer that can support one of the walls of the container (10) when the bracket attachments are engaged in the said container's groove, which opens towards the ground,
- a branch (4) that projects in the opposite direction with respect to the projection (5), forming a spacer and located roughly at the column's midpoint, but slightly closer to the end with the bracket attachments (6), with the said branch being capable of being placed on the ground, either when the said container is in a tilted position in which the ends of the columns on the same side as the bracket attachments (6) are not in contact with the ground, or when the said container is in a tilted position in which the ends of the columns (2) on the same side as the bracket attachments (6) are in contact with the ground.

2. Tool (1) according to claim 1, ***characterised* in that** it includes means to adjust the length of each column (2).

3. Tool (1) according to either one of claims 1 and 2, ***characterised* in that** the said branches (4) are perpendicular to the columns (2).

4. Tool (1) according to claim 1, ***characterised* in that** the said anti-slip means of support consist of one or more points that can penetrate slightly into the ground.

5. Tool (1) according to claim 1, ***characterised* in that** the said anti-slip means of support consist of an end cap made of a material with a high coefficient of friction.

6. Tool (1) according to claim 5, ***characterised* in that** rubber is used as the material with a high coefficient of friction.
